# EUROPEAN PATENT APPLICATION

(11) **EP 4 503 298 A1**
(43) Date of publication of application: **05.02.2025**
(21) Application number: 22948273.2
(22) Date of filing: 28.06.2022
(51) Int. Cl.: H01M 50/367, H01M 50/15

(54) **END CAP ASSEMBLY, BATTERY CELL, AND ELECTRIC DEVICE**

(71) Applicant: Contemporary Amperex Technology Co., Limited, Ningde, Fujian 352100 (CN)
(72) Inventor: WANG, Liqin, Ningde, Fujian 352100 (CN); MENG, Wanqiu, Ningde, Fujian 352100 (CN); XUE, Longfei, Ningde, Fujian 352100 (CN); LIU, Yanyu, Ningde, Fujian 352100 (CN); LI, Quankun, Ningde, Fujian 352100 (CN); XIE, Yongfeng, Ningde, Fujian 352100 (CN)
(74) Representative: Gong, Jinping
(86) International application number: PCT/CN2022/101821
(87) International publication number: WO 2024/000150

(57) **Abstract**

The present application provides an end cover assembly for a battery cell. The end cover assembly includes: an end cover, an exhaust mechanism being provided on the end cover; and an insulating component provided on the side of the end cover close to the interior of the battery cell. An exhaust channel is provided between the insulating component and the end cover to communicate the exhaust mechanism with the interior of the battery cell. The end cover assembly can improve the exhaust efficiency of the battery cell, thereby improving the reliability of the battery cell.

## Description

### Technical Field

The present application relates to the technical field of batteries, and more particularly to an end cover assembly of a battery cell and an electrical device.

### Background

Energy conservation and emission reduction are the key to the sustainable development of the automobile industry. In view of this, electric vehicles have become an important part of the sustainable development of the automotive industry due to their advantages of energy conservation and environmental protection. For electric vehicles, battery technology is an important factor related to their development.

Generally, a battery is composed of a plurality of battery cells. Each battery cell includes a case, an end cover assembly, and an electrode assembly located in the case. The end cover assembly is configured to cover the electrode assembly in the case. Battery cells need to have certain exhaust performance to avoid safety issues caused by imbalance of internal and external pressures. For this reason, it is an urgent problem to be solved to improve the exhaust efficiency and reliability of battery cells.

### Summary of the Invention

The present application provides an end cover assembly of a battery cell and an electrical device that can improve the exhaust efficiency and reliability of the battery cell.

In a first aspect, an end cover assembly for a battery cell is provided. The end cover assembly includes: an end cover, an exhaust mechanism being provided on the end cover; and an insulating component provided on the side of the end cover close to the interior of the battery cell. An exhaust channel is provided between the insulating component and the end cover to communicate the exhaust mechanism with the interior of the battery cell.

In an embodiment of the present application, the end cover assembly of the battery cell includes an end cover and an insulating component. The insulating component is provided on the side of the end cover close to the interior of the battery cell. An exhaust mechanism is provided on the end cover assembly and an exhaust channel is provided between the insulating component and the end cover to communicate the exhaust mechanism with the interior of the battery cell. By providing an exhaust channel between the insulating component and the end cover to communicate the exhaust mechanism with the interior of the battery cell, the space between the end cover and the insulating component is increased, reducing the probability of liquid sealing, which is beneficial to circulation of the air inside the battery cell to the exhaust mechanism, thereby improving the exhaust efficiency and reliability of the battery cell.

In an implementation, the exhaust channel includes a groove provided on the surface of the insulating component facing the end cover. By providing a groove facing the end cover on the insulating component, an exhaust channel can be formed between the end cover and the insulating component to communicate the exhaust mechanism with the interior of the battery cell, eliminating the need to add additional components and reducing the structural complexity of the end cover assembly.

In an implementation, one end of the exhaust channel is in communication with the exhaust mechanism, and the other end of the exhaust channel is in communication with an edge of the insulating component. Usually, the area of the insulating component is smaller than that of the end cover. When one end of the exhaust channel is communication with the exhaust mechanism on the end cover and the other end is in communication with the edge of the insulating component, the air inside the battery cell can reach the exhaust mechanism via the exhaust channel, ensuring the smooth opening of the exhaust mechanism and consequently ensuring the exhaust efficiency.

In an implementation, the exhaust channel includes a groove provided on the surface of the end cover facing the interior of the battery cell. By providing a groove facing the insulating component on the end cover, an exhaust channel can be formed between the end cover and the insulating component to communicate the exhaust mechanism with the interior of the battery cell, eliminating the need to add additional components and reducing the structural complexity of the end cover assembly.

In an implementation, one end of the exhaust channel is in communication with the exhaust mechanism, and the other end of the exhaust channel is in communication with the position on the end cover corresponding to the edge of the insulating component. Usually, the area of the insulating component is smaller than that of the end cover. When one end of the exhaust channel is in communication with the exhaust mechanism on the end cover and the other end is in communication with the position on the end cover corresponding to the edge of the insulating component, the air inside the battery cell can reach the exhaust mechanism via the exhaust channel, providing high exhaust efficiency.

In an implementation, the exhaust mechanism includes a pressure relief component to relieve the pressure inside the battery cell when thermal runaway occurs in the battery cell. The exhaust channel is configured to communicate the pressure relief component with the interior of the battery cell.

When thermal runaway occurs in the battery cell, the air inside the battery cell can reach the pressure relief component through the exhaust channel between the insulating component and the end cover, thereby relieving the pressure through the pressure relief component. The exhaust channel facilitates circulation of the air inside the battery cell to the pressure relief component, thereby improving the safety of the battery cell.

In an implementation, a ventilating structure is provided on the end cover. The ventilating structure includes a ventilating hole and a ventilating film covering the ventilating hole, and the exhaust channel is configured to communicate the ventilating structure with the interior of the battery cell.

The ventilating hole and the ventilating film on the exhaust mechanism are configured to balance the air pressure of the battery cell and the outside world. The exhaust channel between the insulating component and the end cover facilitates circulation of the air inside the battery cell to the ventilating film, improving the ventilation efficiency of the battery cell.

In an implementation, a step is provided on the surface of the end cover close to the interior of the battery cell, a support sheet is accommodated in the step, and at least one through hole is provided in the support sheet. The ventilating film is located between the support sheet and the end cover and covers the at least one through hole, and the exhaust channel is configured to communicate the at least one through hole with the interior of the battery cell. By providing the support sheet and accommodating it in the step on the surface of the end cover, a fixing and supporting effect is provided for the ventilating film, and since at least one through hole is provided in the support sheet, the air exchange between two sides of the ventilating film will not be affected.

In an implementation, the ratio of the cross-sectional area of the exhaust channel to the total area of the at least one through hole is greater than or equal to 0.1% and less than or equal to 40%; preferably, greater than or equal to 0.2% and less than or equal to 20%; further preferably, greater than or equal to 0.5% and less than or equal to 15%. When the ratio of the cross-sectional area of the exhaust channel to the total area of the at least one through hole is within the appropriate range as described above, the exhaust capability of the ventilating film can match with that of the at least one through hole. It is avoided that the total area of at least one through hole is so small that the air passing through the ventilating film cannot be discharged from the at least one through hole in time, and it is also avoided that the total area of the at least one through hole is so large that the reliability of fixing and supporting of the ventilating film by the support sheet is compromised.

In an implementation, the exhaust mechanism further includes a pressure relief component, a first through hole is provided in the insulating component at a position corresponding to the pressure relief component, and the exhaust channel is configured to communicate the ventilating structure with the first through hole. By providing a first through hole on the insulating component at a position corresponding to the pressure relief component, the exhaust channel can be formed between the first through hole and the exhaust mechanism, and the air inside the battery cell can reach the ventilating structure along the first through hole through the exhaust channel, further improving the ventilation efficiency of the battery cell.

In an implementation, a second through hole is provided in the insulating component at a position corresponding to the ventilating structure, and the exhaust channel is configured to communicate the ventilating structure with the second through hole. By providing a second through hole on the insulating component at a position corresponding to the ventilating film, the air inside the battery cell can directly circulate to the ventilating structure through the second through hole, further improving the ventilation efficiency of the battery cell.

In an implementation, a baffle is provided between the second through hole and the metal component in the battery cell to isolate the end cover from the metal component. The baffle can prevent the metal wire on the end cover from overlapping with the metal component in the battery cell and avoid short circuits, improving the safety of the battery cell.

In an implementation, a connecting member is provided between the baffle and the insulating component to fix the baffle to the insulating component. An exhaust gap is formed between the baffle and the insulating component.

In an implementation, the width of the exhaust channel is greater than or equal to 0.5 mm and less than or equal to 4 mm; and/or the depth of the exhaust channel is greater than or equal to 0.1 mm and less than or equal to 0.6 mm. When the size of the exhaust channel is within the appropriate range as mentioned above, the exhaust channel can obtain better exhaust capability without having a major impact on the structure of the end cover and the insulating component, ensuring the structural stability of the end cover assembly.

In a second aspect, a battery cell is provided, including: an electrode assembly; a case to accommodate the electrode assembly; and an end cover assembly described in the first aspect or any implementation of the first aspect, the end cover assembly being configured to close the electrode assembly within the case.

In a third aspect, an electrical device is provided, including a plurality of battery cells described in the first aspect, the battery cells being configured to supply electric energy to the electrical device.

### Description of Drawings

In order to illustrate the technical solutions of the embodiments of the present application more clearly, the drawings required in the embodiments of the present application will be briefly introduced below. Obviously, the drawings described below represent only some embodiments of the present application. For those of ordinary skill in the art, other drawings can also be obtained according to the drawings without any creative effort.
Fig. 1 is a schematic structural view of a vehicle according to an embodiment of the present application;
Fig. 2 is a schematic structural view of a battery according to an embodiment of the present application;
Fig. 3 is a schematic structural view of a battery cell according to an embodiment of the present application;
Fig. 4 is an exploded view of an end cover assembly according to an embodiment of the present application;
Fig. 5 is a partial sectional view of an exhaust channel of the end cover assembly shown in Fig. 4;
Fig. 6 is an exploded view of an end cover assembly according to another embodiment of the present application;
Fig. 7 is a partial sectional view of an exhaust channel of the end cover assembly shown in Fig. 6;
Fig. 8 is an exploded view of an end cover assembly according to yet another embodiment of the present application;
Fig. 9 is an exploded view of an end cover assembly according to still another embodiment of the present application;
Fig. 10 is a schematic partial view of an exhaust channel of the end cover assembly shown in Fig. 8;
Fig. 11 is a schematic partial view of an exhaust channel of the end cover assembly shown in Fig. 9;
Fig. 12 is a schematic view of a support sheet on an end cover assembly according to an embodiment of the present application;
Fig. 13 is a schematic view showing the dimensions of an exhaust channel according to an embodiment of the present application;
Fig. 14 is an exploded view of an end cover assembly according to yet another embodiment of the present application;
Fig. 15 is an enlarged view of the area G in the end cover assembly shown in Fig. 14; and
Fig. 16 is a partial sectional view of a second through hole in the end cover assembly shown in Fig. 14.

In the drawings, the figures are not drawn to actual scale.

### Detailed Description

Implementations of the present application will be described in further detail hereinafter in conjunction with the drawings and embodiments. The following detailed description of the embodiments and the drawings are used to illustrate the principles of the present application by way of example, but should not be used to limit the scope of the present application, that is, the present application is not limited to the described embodiments.

Implementations of the present application will be described in further detail hereinafter in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the embodiments of the present application, the same reference numerals indicate the same parts and, for the sake of brevity, the detailed description of the same parts is omitted in the different embodiments. It should be understood that the dimensions such as the thickness, length, and width of various components in the embodiments of the present application shown in the drawings, as well as the dimensions such as the overall thickness, length, and width of the integrated device are illustrative only and shall not constitute any limitation on the present application.

In the present application, the battery cell may include a lithium-ion battery, a lithium-sulfur battery, a sodium-lithium-ion battery, a sodium-ion battery, a magnesium-ion battery, or the like, which is not limited in embodiments of the present application. The battery cell may be cylindrical, flat, cuboid, or in other shapes, which is also not limited in embodiments of the present application. The battery cells are generally divided into three types according to packaging manners: cylindrical battery cells, prismatic battery cells, and pouch cells, which is also not limited in embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for encapsulating one or more battery cells. The box can prevent liquids or other foreign matters from affecting the charging or discharging of the battery cells.

Usually, a battery cell relies on the gap between its end cover and the insulating component located on the side of the end cover close to the interior of the battery cell for air exchange. When there is liquid in the gap, liquid sealing will occur, affecting the discharge performance of the battery cell, which may easily cause safety problems due to imbalance of internal and external pressures of the battery cell.

In view of this, embodiments of the present application provide an end cover assembly including an end cover and an insulating component. An exhaust channel is provided between the insulating component and the end cover to communicate the exhaust mechanism with the interior of the battery cell. Therefore, the space between the end cover and the insulating component is increased, and the probability of liquid sealing is reduced, which is beneficial to circulation of the air inside the battery cell to the exhaust mechanism, thereby improving the exhaust efficiency and reliability of the battery cell.

The technical solutions described in embodiments of the present application are all applicable to a variety of electrical devices using batteries.

The electrical devices may be, but not limited to, a vehicle, a mobile phone, a portable device, a laptop computer, a ship, a spacecraft, an electric toy, an electric tool, and the like. The vehicle may be a fuel vehicle, an air vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. Embodiments of the present application do not impose special limitations on the above electrical device.

For the convenience of illustration, the following embodiments are illustrated with the electrical device being a vehicle as an example.

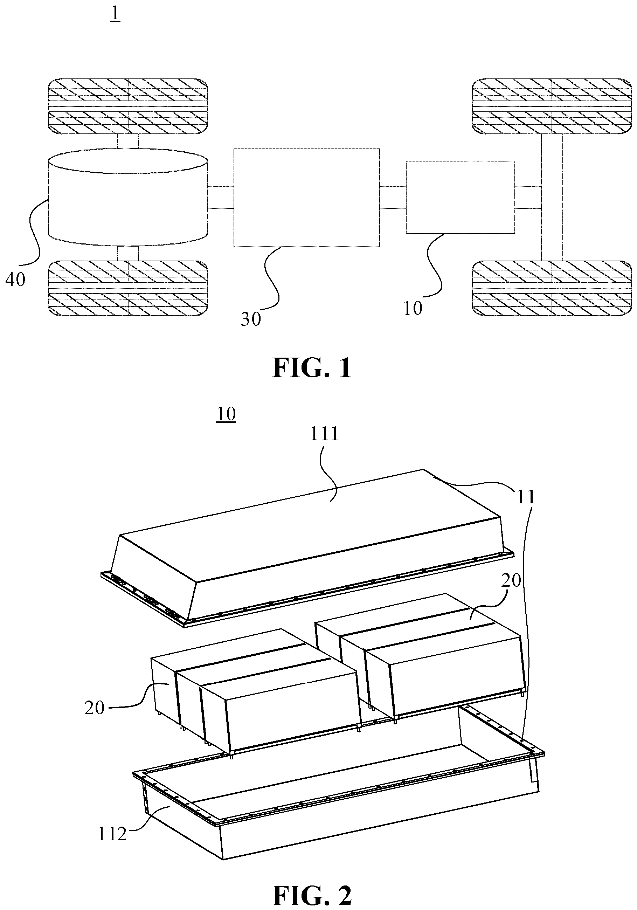

As an example, as shown in Fig.1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. The interior of the vehicle 1 can be provided with a motor 40, a controller 30, and a battery 10, and the controller 30 is used for controlling the battery 10 to power the motor 40. As an example, the battery 10 may be arranged at the bottom or the head or the tail of the vehicle 1. The battery 10 may be configured to supply power to the vehicle 1. As an example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power supply for the vehicle 1, but also as a driving power source for the vehicle 1, so as to replace or partially replace fuel or natural air to provide driving power for the vehicle 1. The battery 10 may also be called a battery pack.

For example, Fig. 2 shows a schematic structural view of a battery 10 according to an embodiment of the present application. The battery 10 may include a plurality of battery cells 20. The battery 10 may further include a box 11, the box 11 is of a hollow structure inside, and the plurality of battery cells 20 are accommodated in the box 11. Fig. 2 shows a possible implementation of the box 11 according to an embodiment of the present application. As shown in Fig. 2, the box 11 may include two parts, which are referred to here as a first box portion 111 and a second box portion 112 respectively, and the first box portion 111 and the second box portion 112 are snap-fitted together. The shapes of the first box portion 111 and the second box portion 112 may be determined according to the combined shape of the plurality of battery cells 20, and at least one of the first box portion 111 and the second box portion 112 has an opening. For example, as shown in Fig. 2, both the first box portion 111 and the second box portion 112 may be hollow cuboids and each has only one surface being an opening surface, the opening of the first box portion 111 and the opening of the second box portion 112 are disposed opposite to each other, and the first box portion 111 and the second box portion 112 are snap-fitted together to form the box 11 having an enclosed cavity.

As another example, in contrast to what is shown in Fig. 2, only one of the first box portion 111 and the second box portion 112 may be a hollow cuboid with an opening, and the other one may be of a plate shape to cover the opening. For example, here the second box portion 112 is a hollow cuboid and has only one surface being an opening surface, and the first box portion 111 is of a plate shape. Then the opening of the second box portion 112 is covered by the first box portion 111 to form the box 11 having an enclosed cavity for accommodating the plurality of battery cells 20. The plurality of battery cells 20 are combined in parallel, in series or in a hybrid pattern, and then placed in the box 11 formed by snap-fitting the first box portion 111 to the second box portion 112.

In some embodiments, the battery 10 may also include other structures, which will not be described here. For example, the battery 10 may further include a busbar component configured to realize electrical connection between the plurality of battery cells 20, such as parallel connection, series connection or hybrid connection. Specifically, the busbar component may realize electrical connection between the battery cells 20 by connecting electrode terminals of the battery cells 20. In some embodiments, the busbar component may be fixed to the electrode terminals of the battery cells 20 by welding. Electric energy from the plurality of battery cells 20 may be further led out via an electrically conductive mechanism through the box 11.

Depending on different power demands, the number of battery cells 20 in the battery 10 may be set to any value. The plurality of battery cells 20 may be connected in series, parallel or hybrid pattern to achieve larger capacity or power, where the term hybrid pattern means mixture of series and parallel connections. Since each battery 10 may include a large number of battery cells 20, in order to facilitate installation, the battery cells 20 may be arranged in groups, and each group of battery cells 20 forms a battery module 200. The number of battery cells 20 included in the battery module 200 is not limited and may be set according to the demand. That is, the plurality of battery cells 20 may directly form a battery 10, or may form battery modules first, and then the battery modules form a battery 10.

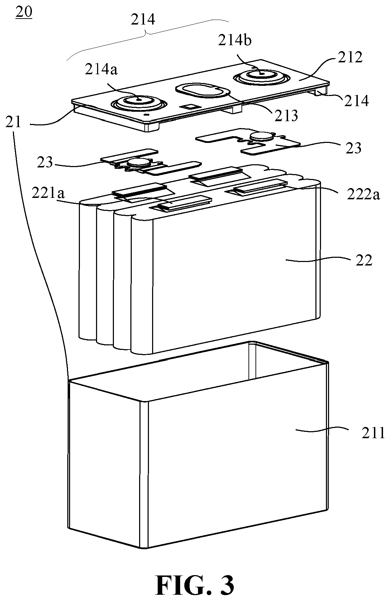

As an example, as shown in Fig. 3, a possible schematic structural view of a battery cell 20 is shown. The battery cell 20 includes one or more electrode assemblies 22, a case 211 and an end cover 212. The case 211 and the end cover 212 form a housing or battery case 21. The wall of the case 211 and the end cover 212 are both called the wall of the battery cell 20. For a cuboid-shaped battery cell 20, the wall of the case 211 includes a bottom wall and four side walls. The shape of the case 211 is determined according to the combined shape of one or more electrode assemblies 22. For example, the case 211 may be a hollow cuboid, cube, or cylinder, and one of the surfaces of the case 211 has an opening to facilitate placing the one or more electrode assemblies 22 in the case 211. For example, when the case 211 is a hollow cuboid or cube, one of the planes of the case 211 is an opening surface, that is, this plane has no walls so that the inside and outside of the case 211 are in communication with each other. When the case 211 is a hollow cylinder, the end surface of the case 211 is an opening surface, that is, this end surface does not have a wall so that the inside and outside of the case 211 are in communication with each other. The end cover 212 covers the opening and is connected with the case 211 to form an enclosed cavity in which the electrode assemblies 22 are placed. The case 211 is filled with electrolyte, such as electrolyte solution.

As shown in Fig. 3, an insulating component 214 is further provided on the side of the end cover 212 facing the electrode assembly 22. The insulating component 214 may also be called lower plastic.

The battery cell 20 may further include two electrode terminals 214, which may be provided on the end cover 212. The end cover 212 is generally in the shape of a flat plate, and the two electrode terminals 214 are fixed to the flat plate surface of the end cover 212. The two electrode terminals 214 are a positive electrode terminal 214a and a negative electrode terminal 214b respectively. Each of the electrode terminals 214 is provided with a corresponding connecting member 23, which may alternatively be referred to as a current collecting member 23, located between the end cover 212 and the electrode assembly 22 for electrically connecting the electrode assembly 22 and the electrode terminal 214.

As shown in Fig. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tab 221a of one or more electrode assemblies 22 is connected to one electrode terminal via one connecting member 23, and the second tab 222a of the one or more electrode assemblies 22 is connected to the other electrode terminal via the other connecting member 23. For example, the positive electrode terminal 214a is connected to the positive electrode tab via one connecting member 23, and the negative electrode terminal 214b is connected to the negative electrode tab via the other connecting member 23.

In the battery cell 20, a single electrode assembly 22 or a plurality of electrode assemblies 22 may be provided according to actual usage requirements. As shown in Fig. 3, four independent electrode assemblies 22 are provided in the battery cell 20.

It should be understood that the plurality of battery cells 20 included in the battery 10 in the embodiments of the present application may be arranged and placed in any orientation in the box 11. For example, taking the cuboid shaped battery cell 20 as shown in Fig. 3 as an example, as shown in Fig. 2, a plurality of battery cells 20 may be installed in the box 11 in the vertical direction as shown in Fig. 3 in such a manner that, after installation, the end covers 212 of the plurality of battery cells 20 face the upper box 111, and the bottom walls of the cases 211 of the battery cells 20 face the lower box 112. As another example, unlike Fig. 2, a plurality of battery cells 20 as shown in Fig. 3 may also be arranged horizontally in the box 11.

In the end cover assembly shown in Fig. 3, when no channel for exhausting the battery cell 20 is provided between the insulating component 214 and the end cover 212, the air inside the battery cell 20 can only go through air exchange via the gap between the end cover 212 and the lower plastic 214. When liquid is present in the gap, liquid sealing will occur, which makes it impossible for the battery cell 20 to be effectively ventilated.

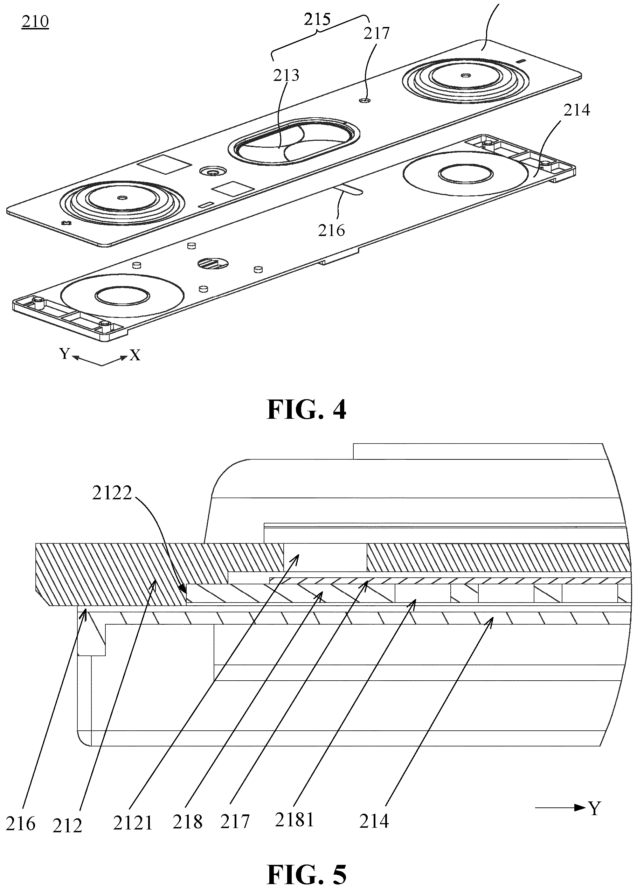

To this end, the present application provides an end cover assembly 210 that can effectively improve the exhaust efficiency of the battery cell 20. The end cover assembly 210 of embodiments of the present application will be described in detail below in conjunction with Figs. 4 to 28. It should be understood that the end cover assembly shown in Fig. 3 may be replaced by the end cover assembly 210 in the embodiment of the present application as described below.

Figs. 4 to 28 illustrate the end cover assembly 210 according to embodiments of the present application. The end cover assembly 210 in the embodiments of the present application is used for the battery cell 20. The end cover assembly210includes an end cover 212 and an insulating component 214. An exhaust mechanism 215 is provided on the end cover 212. The insulating component 214 is arranged on the side of the end cover 212 close to the interior of the battery cell 20. An exhaust channel 216 is provided between the insulating component 214 and the end cover 212. The exhaust channel 216 is configured to communicate the exhaust mechanism 215 with the interior of the battery cell 20.

It should be understood that the interior of the battery cell 20 here refers to the part of the battery cell 20 located below the insulating component 214, that is, the space enclosed by the insulating component 214 and the case 211 in the battery cell 20. Specifically, it includes the space formed between the surface of the insulating component 214 facing the electrode assembly 22 and the bottom wall of the case 211, and the space formed between the plane where the side surface of the insulating component 214 is located and the side wall of the case 211.

The exhaust mechanism 215 may include, for example, a pressure relief component 213 provided on the end cover 212, a ventilating structure 217, or other structures for air exchange between the battery cell 20 and the outside world. The ventilating structure 217 is also called a ventilating valve, and may include a ventilating hole 2121 and a ventilating film 2171 covering the ventilating hole 2121. The exhaust channel 216 is located between the end cover 212 and the insulating component 213 to communicate the exhaust mechanism 215 with the interior of the battery cell 20 so as to form a path for air circulation between the interior of the battery cell 20 and the exhaust mechanism 215.

The insulating component 215 is configured to isolate the end cover 212 from the interior of the battery cell 20 and may be made of plastic.

By providing an exhaust channel 216 between the insulating component 214 and the end cover 212 to communicate the exhaust mechanism 215 with the interior of the battery cell 20, the space between the end cover 212 and the insulating component 214 is increased, reducing the probability of liquid sealing, which is beneficial to circulation of the air inside the battery cell 20 to the exhaust mechanism 215, thereby improving the exhaust efficiency and reliability of the battery cell 20.

Figs. 4 and 5 show a possible implementation of the end cover assembly 210, where Fig. 4 is an exploded view of the end cover assembly 210, and Fig. 5 is a partial sectional view of the end cover assembly 210 shown in Fig. 4 at the exhaust channel 216.

In an implementation, as shown in Figs. 4 and 5, the exhaust channel 216 includes a groove 216 provided on the surface of the insulating component 214 facing the end cover 212. By providing the groove 216 facing the end cover 212 on the insulating component 214, an exhaust channel 216 can be formed between the end cover 212 and the insulating component 214 to communicate the exhaust mechanism 215 with the interior of the battery cell 20, eliminating the need to add additional components and reducing the structural complexity of the end cover assembly 210.

In an implementation, one end of the exhaust channel 216 is in communication with the exhaust mechanism 215, and the other end of the exhaust channel 216 is in communication with an edge of the insulating component 214. Generally, the area of the insulating component 214 is smaller than that of the end cover 212. When one end of the exhaust channel 216 is in communication with the exhaust mechanism 215 on the end cover 212 and the other end is in communication with the edge of the insulating component 214, the air inside the battery cell 20 can reach the exhaust mechanism 215 through the exhaust channel 216 along the inner wall of the case 211 of the battery cell 20, thereby providing high exhaust efficiency. For example, as shown in Figs. 4 and 5, one end of the exhaust channel 216 is in communication with the exhaust mechanism 215, and the other end is in communication with the edge of the insulating component 214.

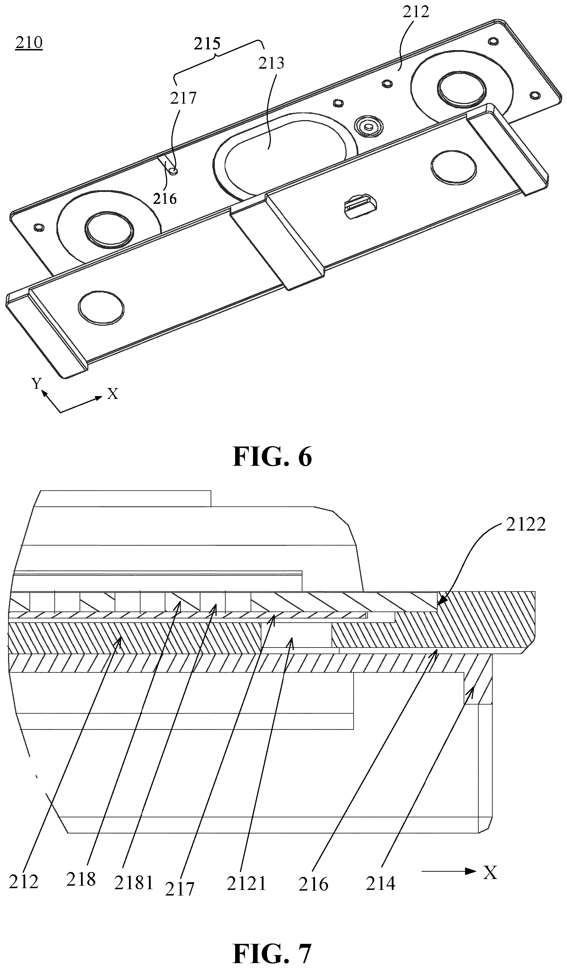

Figs. 6 and 7 show another possible implementation of the end cover assembly 210, where Fig. 6 is an exploded view of the end cover assembly 210, and Fig. 7 is a partial sectional view of the end cover assembly 210 shown in Fig. 6 at the exhaust channel 216.

In an implementation, as shown in Figs.6 and 7, the exhaust channel 216 includes a groove 216 provided on the surface of the end cover 212 facing the interior of the battery cell 20. By providing the groove 216 facing the insulating component 214 on the end cover 212, an exhaust channel 216 can be formed between the end cover 212 and the insulating component 214 to communicate the exhaust mechanism 215 with the interior of the battery cell 20, eliminating the need to add additional components and reducing the structural complexity of the end cover assembly 210.

In an implementation, one end of the exhaust channel 216 is in communication with the exhaust mechanism 215, and the other end of the exhaust channel 216 is in communication with the position on the end cover 212 corresponding to the edge of the insulating component 214. Generally, the area of the insulating component 214 is smaller than that of the end cover 212. When one end of the exhaust channel 216 is in communication with the exhaust mechanism 215 on the end cover 212 and the other end is in communication with the position on the end cover 212 corresponding to the edge of the insulating component 214, the air inside the battery cell 20 can reach the exhaust mechanism 215 through the exhaust channel 216 along the inner wall of the case 211 of the battery cell 20, thereby providing high exhaust efficiency. For example, as shown in Figs. 6 and 7, one end of the exhaust channel 216 is in communication with the exhaust mechanism 215, and the other end is in communication with the position on the end cover 212 corresponding to the edge of the insulating component 214.

In an implementation, as shown in Figs. 4 to 7, a ventilating structure 217 is provided on the end cover 212. The ventilating structure includes a ventilating hole 2121 and a ventilating film 2171 covering the ventilating hole 2121. The exhaust channel 216 is configured to communicate the ventilating structure 217 with the interior of the battery cell 20. The ventilating hole 2121 and the ventilating film 2171 on the exhaust mechanism 215 are configured to balance the air pressure of the battery cell 20 and the outside world. The exhaust channel 216 between the insulating component 214 and the end cover 212 facilitates circulation of the air inside the battery cell 20 to the ventilating film 2171, improving the ventilation efficiency of the battery cell 20. The shape of the ventilating hole 2121 may be, for example, circular, square, or the like, which is not limited in the present application.

The ventilating film 2171 has a ventilating function, and may be made of PP (polypropylene), PE (polyethylene), PU (polyurethane) or the like. The air inside the battery cell 20 needs to pass through the ventilating film 2171 when it is discharged. The ventilating film 2171 can allow the air inside the battery cell 20 to circulate to the outside, and can block water vapor and the like from outside the battery cell 20 from entering the inside of the battery cell 20.

For example, as shown in Figs. 4 and 5, the exhaust channel 216 is a groove 216 on the insulating component 214, one end of which is in communication with the edge of the insulating component 214, and the other end is in communication with the ventilating film 2171. As another example, as shown in Figs. 6 and 7, the exhaust channel 216 is a groove 216 on the end cover 212, one end of which is in communication with the position on the end cover 212 corresponding to the edge of the insulating component 214, and the other end is in communication with the ventilating film 2171.

In another implementation, the exhaust mechanism 215 includes a pressure relief component 213 to relieve the pressure when thermal runaway occurs in the battery cell 20, and the exhaust channel 216 is configured to communicate the pressure relief component 213 with the interior of the battery cell 20.

Specifically, the pressure relief mechanism 213 is configured to be actuated to relieve the internal pressure or temperature of a battery cell 20 when the internal pressure or temperature reaches a threshold. The pressure relief component 213 may have various possible pressure relief structures, which is not limited in the embodiments of the present application. For example, the pressure relief component 213 may be a temperature-sensitive pressure relief component configured to melt when the internal temperature of the battery cell 20 provided with the pressure relief component 213 reaches a threshold; and/or the pressure relief component 213 may be a pressure-sensitive pressure relief component configured to rupture when the internal air pressure of the battery cell 20 provided with the pressure relief component 213 reaches a threshold.

As such, when thermal runaway occurs in the battery cell 20, the air inside the battery cell 20 can reach the pressure relief component 213 through the exhaust channel 216 between the insulating component 214 and the end cover 212 and the pressure inside the battery cell 20 is relieved through the pressure relief component 213. The exhaust channel 216 facilitates circulation of the air inside the battery cell 20 to the pressure relief component 213, thereby improving the safety of the battery cell 20.

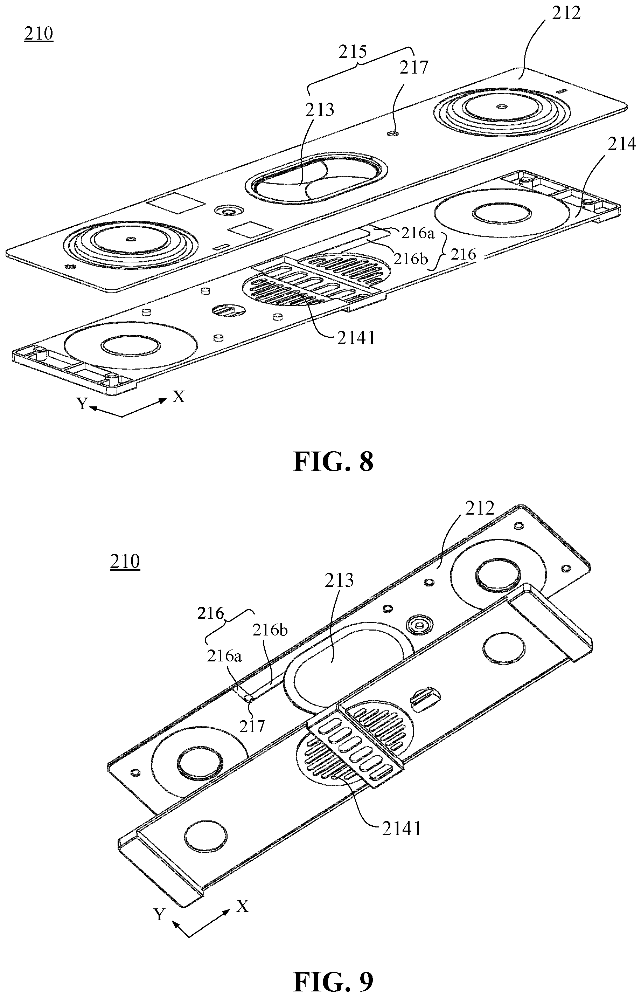

For example, as shown in Fig. 8 or 9, where in Fig. 8, the exhaust channel 216 is a groove on the insulating component 214 as an example, and in Fig. 9, the exhaust channel 216 is a groove on the end cover 214 as an example, the exhaust channel 216 communicates both the pressure relief component 213 and the ventilating film 2171 with the interior of the battery cell 20. For example, as shown in Fig. 8, the exhaust channel 216 is a groove 216 on the insulating component 214. The groove 216 includes a section 216a parallel to the Y direction and a section 216b parallel to the X direction, where the X direction is the long side direction of the end cover assembly 210, and the Y direction is the short side direction of the end cover assembly 210. It can be seen that one end of the exhaust channel 216 is in communication with the edge of the insulating component 214, and the other end is in communication with the ventilating structure 271, and is also in communication with the pressure relief component 213 via the ventilating structure 271. As another example, as shown in Fig. 9, the exhaust channel 216 is a groove 216 on the end cover 212. The groove 216 includes a section 216a parallel to the Y direction and a section 216b parallel to the X direction. It can be seen that one end of the exhaust channel 216 is in communication with the position on the end cover 212 corresponding to the edge of the insulating component 214, and the other end is in communication with the ventilating structure 271, and is also in communication with the pressure relief component 213 via the ventilating structure 271.

In practical applications, the exhaust channel 216 may only be configured to communicate the ventilating structure 217 with the interior of the battery cell 20. For example, the exhaust channel 216 may only include the section 216a of the exhaust channel 216 in Figs. 4 to 7 and not the other section 216b; or, the exhaust channel 216 is configured to communicate both the pressure relief component 213 with the interior of the battery cell 20 and the ventilating film 2171 with the interior of the battery cell 20, for example, as shown in Figs. 8 and 9; or, the exhaust channel 216 may also only be configured to communicate the pressure relief component 213 with the interior of the battery cell 20 (not shown).

In an implementation, the exhaust mechanism 215 includes a ventilating structure 217 and a pressure relief component 213. A first through hole 2141 is provided in the insulating component 214 at a position corresponding to the pressure relief component 213. The exhaust channel 216 is configured to communicate the ventilating structure 217 with the first through hole 2141. By providing the first through hole 2141 on the insulating component 214 at a position corresponding to the pressure relief component 213, the exhaust channel 216 can be formed between the first through hole 2141 and the exhaust mechanism 215, and the air inside the battery cell 20 can reach the ventilating film 2171 through the exhaust channel 216 along the first through hole 2141, further improving the ventilation efficiency.

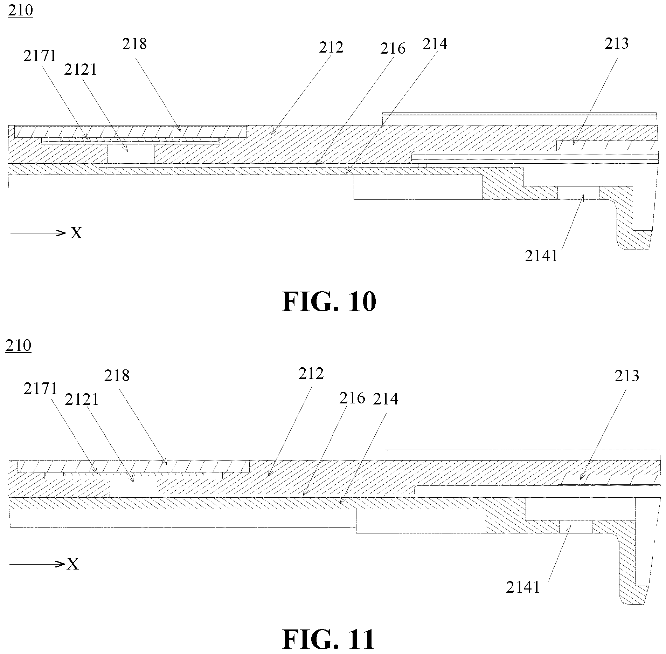

For example, the exhaust channel 216 may include only the section 216b of the exhaust channel 210 shown in Figs. 8 to 9and not the other section 216a. Figs. 10 and 11 are sectional views of the exhaust channel 216b in Figs. 8 and 9 perpendicular to the Y direction respectively. As shown in Figs. 10 and 11, the exhaust channel 216b is configured to communicate the ventilating film 217 with the first through hole 2141. The air inside the battery cell 20 can reach the exhaust channel 216b through the first through hole 2141, and pass through the exhaust channel 216b to be discharged from the ventilating film 217 so as to ensure the ventilation of the battery cell 20.

Meanwhile, since the first through hole 2141 is arranged opposite to the pressure relief component 213, when thermal runaway occurs in the battery cell 20, the air inside the battery cell 20 can be discharged through the first through hole 2131 and directly reach the pressure relief component 213, so that the pressure inside the battery cell 20 is relieved through the pressure relief component 213 to ensure the safety of the battery cell 20.

It should be understood that the path of the exhaust channel 216 shown in Figs. 4 to 11 is only an example. The exhaust channel 216 on the end cover 212 or the insulating component 214 may also have other paths, which is not limited by the present application, as long as it is able to communicate the exhaust mechanism 215 with the interior of the battery cell 20.

In the embodiment of the present application, the groove 216 may be provided only on the insulating component 214; or the groove 216 may be provided only on the end cover 212; or the groove 216 may be provided on both the insulating component 214 and the end cover 212. In this case, the paths of the groove on the insulating component 214 and the groove on the end cover 212 may overlap or may be different.

In an implementation, as shown in Figs. 4 to 11, a step 1212 is provided on the surface of the end cover 212, a support sheet 218 is accommodated in the step 2122, and at least one through hole 2181 is provided in the support sheet 218. The ventilating film 217 is located between the support sheet 218 and the end cover 212 and covers the at least one through hole 2181. The exhaust channel 216 is configured to communicate the at least one through hole 2181 with the interior of the battery cell 20.

For example, as shown in Figs. 4 and 5, a step 2122 is provided on the surface of the end cover 212 close to the interior of the battery cell 20, a support sheet 218 is accommodated in the step 2122, and at least one through hole 2181 is provided in the support sheet 218. The ventilating film 217 is located between the support sheet 218 and the end cover 212 and covers the least one through hole 2181, and the exhaust channel 216 is configured to communicate the at least one through hole 2181 with the interior of the battery cell 20.

As another example, as shown in Figs. 6 and 7, the step 2122 may also be provided on the surface of the end cover 212 away from the interior of the battery cell 20. The step 2122 is provided on the surface of the end cover 212 away from the interior of the battery cell 20, a support sheet 218 is accommodated in the step 2122, and at least one through hole 2181 is provided in the support sheet 218. The ventilating film 2171 is located between the support sheet 218 and the end cover 212 and covers the least one through hole 2181, and the exhaust channel 216 is configured to communicate the at least one through hole 2181 with the interior of the battery cell 20.

The support sheet 218 may be, for example, a metal sheet. For example, the material of the support sheet may be aluminum, stainless steel, copper, or the like, or the support sheet 218 may also be formed from other materials with certain rigidity. The support sheet 218 may be fixed in the step 2122 of the end cover 212 by means of laser welding or the like, and the ventilating film 2171 may be adhered to the surface of the support sheet 218. For example, as shown in Figs. 4 to 11, the ventilating film 2171 is adhered to the surface of the support sheet 218. A space for accommodating the ventilating film 2171 is provided between the support sheet 218 and the end cover 212. The ventilating film 2171 is made from, for example, PP or PE.

By providing the support sheet 218 and accommodating it in the step on the surface of the end cover 212, a fixing and supporting effect is provided for the ventilating film 2171, and since at least one through hole 2181 is provided in the support sheet 218, the air exchange between two sides of the ventilating film 2171 will not be affected.

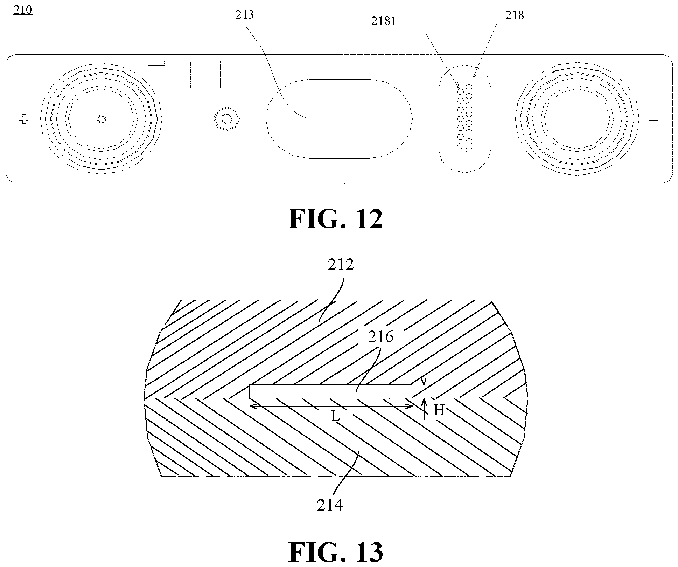

The number of through holes 2181 on the support sheet 218 may be one or more. For example, as shown in Fig. 12, N through holes 2181 are provided on the support sheet 218, N being a positive integer greater than 1. Assume that each through hole has an area of S2, then the total area of the through holes 2181 on the support sheet 218 is N×S2. The cross-sectional area of the exhaust channel 216 is S1. When the cross-section of the exhaust channel 216 is rectangular, S1=H×L, where L and H are the width L and depth of the exhaust channel respectively.

The ratio of the cross-sectional area S1 of the exhaust channel 216 to the total area of at least one through hole N×S2 is K=S1/(N×S2), where K should be within an appropriate range. If the total area of the at least one through hole 2181 is too small, the air passing through the ventilating film 2171 cannot be discharged from the at least one through hole 2181 in time; and if the total area of the at least one through hole 2181 is too large, the reliability of fixing and supporting of the ventilating film 2171 by the support sheet will be compromised.

In an implementation, the ratio K of the cross-sectional area S of the exhaust channel 216 to the total area of the at least one through hole N×S2 is greater than or equal to 0.1% and less than or equal to 40%; preferably, K is greater than or equal to 0.2% and less than or equal to 20%; further preferably, K is greater than or equal to 0.5% and less than or equal to 15%. When the ratio K of the cross-sectional area S of the exhaust channel 216 to the total area of the at least one through hole N×S2 is within the appropriate range as mentioned above, the exhaust capability of the ventilating film 2171 can match with that of the at least one through hole 2181.

Since the exhaust channel 216 is located between the end cover 212 and the insulating component 214, the size of the exhaust channel 216 affects the structure of the end cover 212 or the insulating component 214. For example, as shown in Figs. 4 to 12, when the exhaust channel 216 is the groove 216 on the end cover 212 or the insulating component 214, the wall thickness at the corresponding position of the end cover 212 and the insulating component 214 will be reduced, affecting the structural stability of the end cover assembly 210.

In an implementation, as shown in Fig. 13, which is a side view of Fig. 6, taking the exhaust channel being a groove on the end cover 212 as an example, the width L of the exhaust channel 216 is greater than or equal to 0.5 mm and less than or equal to 4 mm; and/or, the depth H of the exhaust channel 216 is greater than or equal to 0.1 mm and less than or equal to 0.6 mm. When the width L and/or depth H of the exhaust channel 216 is within the appropriate range as mentioned above, the exhaust channel 216 is enabled to obtain better exhaust capability without having a major impact on the structure of the end cover 212 and the insulating component 214, ensuring the structural stability of the end cover assembly 210.

The cross-section of the exhaust channel 216 shown in Fig. 13 is rectangular, and the area of its cross-section is the product of the width L and the depth H. The cross section of the exhaust channel 216 may also be in other shapes, such as semicircle, polygon, square, or the like, which is not limited in the present application.

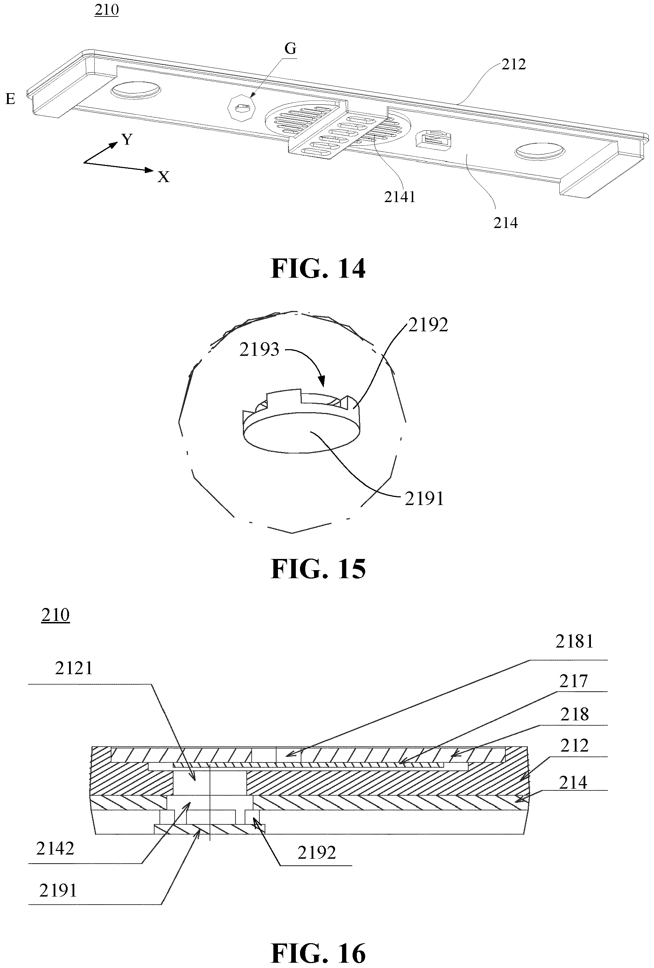

Fig. 14 is a schematic structural view of the end cover assembly 210 according to an embodiment of the present application. Fig. 15 is an enlarged view of the area G in Fig. 14; and Fig. 16 is a partial sectional view of the end cover assembly 210 in Fig. 14 at the second through hole 2141. In an implementation, a second through hole 2142 is provided in the insulating component 214 at a position corresponding to the ventilating hole 2121, and the exhaust channel 216 is configured to communicate the exhaust mechanism 215 with the second through hole 2142. For example, as shown in Figs. 25 to 28, the exhaust channel 216 is located between the ventilating hole 2121 and the second through hole 2142. By providing a second through hole 2142 on the insulating component 214 at a position corresponding to the ventilating film 2171, the air inside the battery cell 20 can directly circulate to the ventilating film 2171 through the second through hole 2142, improving the ventilation efficiency of the battery cell 20.

In an implementation, as shown in Figs. 14 to 16, a baffle 2191 is provided between the second through hole 2142 and a metal component (not shown) in the battery cell 20 to isolate the end cover 212 from the metal component. The baffle 2191 can prevent the metal wire on the end cover 212 from overlapping with the metal component in the battery cell 20 and avoid short circuits, improving the safety of the battery cell 20.

In an implementation, as shown in Figs. 14 to 16, a connecting member 2192 is provided between the baffle 2191 and the insulating component 214 to fix the baffle 2191 to the insulating component 214. An exhaust gap 2193 is formed between the baffle 2191 and the insulating component 214.

It can be understood that when the second through hole 2142 is provided in the insulating component 214, for example, as shown in Figs. 14 to 16, the groove 216 may not be provided on the end cover 212 and the insulating component 214, but rather ventilation is enabled between the ventilating film 2171 and the second through hole 2142 directly. Alternatively, when the second through hole 2142 is provided in the insulating component 214, the groove 216 can be provided on the end cover 212 and/or the insulating component 214 at the same time to optimize the exhaust efficiency of the battery cell 20. That is, the end cover assembly 210 includes both the above-mentioned groove 216 and second through hole 2142.

The present application further provides a battery cell, including: an electrode assembly 22; a case 211 for accommodating the electrode assembly 22; and the end cover assembly 210 described in any of the above implementations. The end cover assembly 210 is configured to close the electrode assembly 22 in the case 211.

The present application further provides an electrical device. The electrical device includes a plurality of battery cells 20 configured to supply electric energy to the electrical device.

It should be noted that, provided that there is no conflict, the various embodiments described in the present application and/or the technical features in various embodiments can be combined with each other in any manner, and the technical solution obtained from the combination should also fall within the protection scope of the present application.

Although the present application has been described with reference to the preferred embodiments, various improvements can be made thereto and components thereof can be replaced with equivalents without departing from the scope of the present application. **In** particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. An end cover assembly for a battery cell, the end cover assembly comprising:
an end cover, an exhaust mechanism being provided on the end cover; and
an insulating component provided on the side of the end cover close to the interior of the battery cell, an exhaust channel being provided between the insulating component and the end cover to communicate the exhaust mechanism with the interior of the battery cell.

2. The end cover assembly of claim 1, wherein the exhaust channel comprises a groove provided on the surface of the insulating component facing the end cover.

3. The end cover assembly of claim 2, wherein one end of the exhaust channel is in communication with the exhaust mechanism, and the other end of the exhaust channel is in communication with an edge of the insulating component.

4. The end cover assembly of any of claims 1 to 3, wherein the exhaust channel comprises a groove provided on the surface of the end cover facing the interior of the battery cell.

5. The end cover assembly of claim 4, wherein one end of the exhaust channel is in communication with the exhaust mechanism, and the other end of the exhaust channel is in communication with the position on the end cover corresponding to the edge of the insulating component.

6. The end cover assembly of any of claims 1 to 5, wherein the exhaust mechanism comprises a pressure relief component to relieve the pressure inside the battery cell when thermal runaway occurs in the battery cell, and the exhaust channel is configured to communicate the pressure relief component with the interior of the battery cell.

7. The end cover assembly of any of claims 1 to 5, wherein a ventilating structure is provided at the end cover, the ventilating structure comprises a ventilating hole and a ventilating film covering the ventilating hole, and the exhaust channel is configured to communicate the ventilating structure with the interior of the battery cell.

8. The end cover assembly of claim 7, wherein a step is provided on the surface of the end cover close to the interior of the battery cell, a support sheet is accommodated in the step, at least one through hole is provided in the support sheet, the ventilating film is located between the support sheet and the end cover and covers the at least one through hole, and the exhaust channel is configured to communicate the at least one through hole with the interior of the battery cell.

9. The end cover assembly of claim 8, wherein the ratio of the cross-sectional area of the exhaust channel to the total area of the at least one through hole is greater than or equal to 0.1% and less than or equal to 40%; preferably, greater than or equal to 0.2% and less than or equal to 20%; further preferably, greater than or equal to 0.5% and less than or equal to 15%.

10. The end cover assembly of any of claims 7 to 9, wherein the exhaust mechanism further comprises a pressure relief component, a first through hole is provided in the insulating component at a position corresponding to the pressure relief component, and the exhaust channel is configured to communicate the ventilating structure with the first through hole.

11. The end cover assembly of any of claims 7 to 10, wherein a second through hole is provided in the insulating component at a position corresponding to the ventilating structure, and the exhaust channel is configured to communicate the ventilating structure with the second through hole.

12. The end cover assembly of claim 11, wherein a baffle is provided between the second through hole and a metal component in the battery cell to isolate the end cover from the metal component.

13. The end cover assembly of claim 12, wherein a connecting member is provided between the baffle and the insulating component to fix the baffle to the insulating component, and an exhaust gap is formed between the baffle and the insulating component.

14. The end cover assembly of any of claims 1 to 13, wherein the width of the exhaust channel is greater than or equal to 0.5 mm and less than or equal to 4 mm; and/or the depth of the exhaust channel is greater than or equal to 0.1 mm and less than or equal to 0.6 mm.

15. A battery cell comprising: an electrode assembly; a case for accommodating the electrode assembly; and the end cover assembly of any of claims 1 to 14 configured to close the electrode assembly in the case.

16. An electrical device comprising a plurality of battery cells of claim 15, the battery cell being configured to supply electric energy to the electrical device.
